# EUROPEAN PATENT SPECIFICATION

(11) **EP 1 596 665 B1**
(45) Date of publication and mention of the grant of the patent: **27.06.2007**
(21) Application number: 03816049.5
(22) Date of filing: 28.02.2003
(51) Int. Cl.: A23G 9/04, A23G 9/24

(54) **ICE-CREAM PRODUCTION PLANT**
PRODUKTIONSANLAGE FÜR SPEISEEIS
USINE DE PRODUCTION DE CREMES GLACEES

(43) Date of publication of application: 23.11.2005
(73) Proprietor: TEKNO-ICE S.r.l., 20090 Buccinasco (Milano) (IT)
(72) Inventor: CONTE, Santino, I-20021 Bollate MILANO (IT)
(74) Representative: Vittorangeli, Lucia
(86) International application number: PCT/IT2003/000116
(87) International publication number: WO 2004/075649

(56) References cited:
- EP-A- 0 571 335
- GB-A- 691 889
- US-A- 5 108 279

## Description

**.** The subject of the present invention is an ice-cream production plant. The plant of the present invention is suitable in particular for the production of ice-creams of the packaged type, such as, for example, cones or so-called ice lollies.

. Ice-cream production plants are known which comprise an ice-cream handling line provided with means for gripping one end of the ice-creams and an ice-cream packaging line disposed downstream of the handling line. Along the handling line, the ice-cream may undergo numerous processes, including a coating process, for example coating with chocolate, with icing or with chopped up foods such as almonds or the like.

**.** Once preparation is completed, a final portion of the handling line releases the ice-creams onto a first conveyor belt parallel to the aforesaid final portion. Conventionally, the first conveyor belt is provided with so-called pockets, each suitable for receiving an ice-cream.

. A reciprocating pusher moves perpendicularly to the first conveyor belt, pushing one ice-cream at a time onto a second conveyor belt normal to the first. The ice-creams are then disposed in a row along the second conveyor belt. The latter is aligned with a packaging line where the ice-creams are deposited on a packaging sheet.

**.** While making it possible to package the ice-creams singly, the solution described above appears rather complex and has functional limitations, besides the fact that the ice-creams may suffer damage during their passage between the handling line, the first conveyor belt, the second conveyor belt and the packaging line.

**.** Added to the damage suffered by the ice-creams, there is also the fact that both the first and the second conveyor belt must be subjected continually to cleaning, in order to eliminate the pieces of coating of the ice-creams or of grit which become detached because of incorrect handling. An ice-cream production plant according to the preamble of claim 1 is known from US 5 108 279.

**.** From what has been stated above, it transpires that there was felt to be a need to provide a plant in which each ice-cream is preserved from damage as far as possible and in which it is possible to limit the cleaning operations.

**.** The problem underlying the present invention is that of proposing an ice-cream production plant which has structural and functional characteristics such as to fulfil the aforesaid requirement and, at the same time, to remedy the drawbacks mentioned with reference to the prior art.

**.** This problem is solved by means of an ice-cream production plant according to claim 1.

**.** The dependent claims correspond to further embodiments of the ice-cream production plant according to the present invention.

**.** Further characteristics and advantages of the ice-cream production plant according to the invention will become clear from the following description of preferred exemplary embodiments, provided by way of nonlimiting example, with reference to the appended figures, in which:

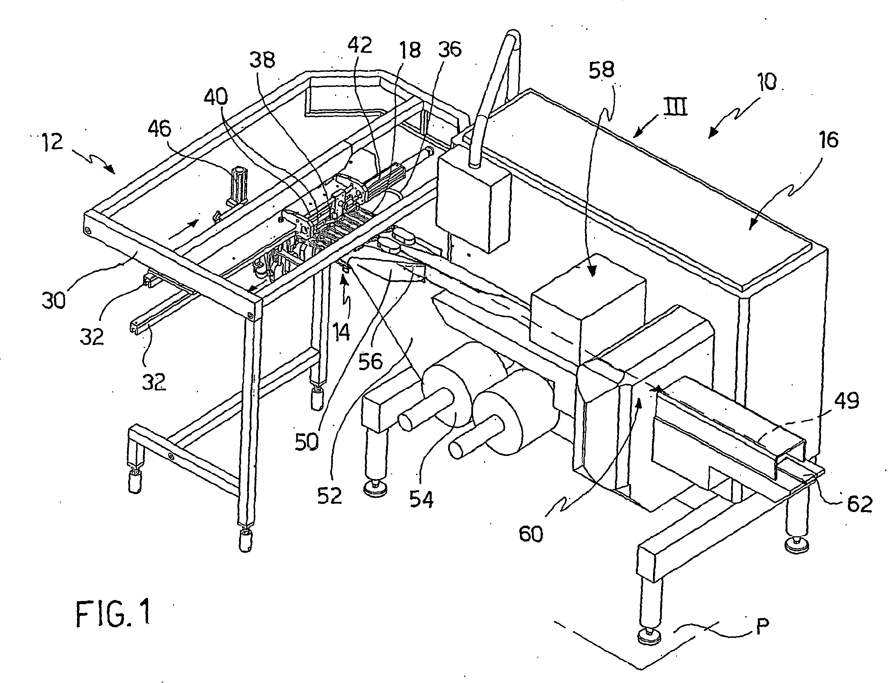

**.** Figure 1 shows a perspective view of a portion of an ice-cream production plant according to the present invention;

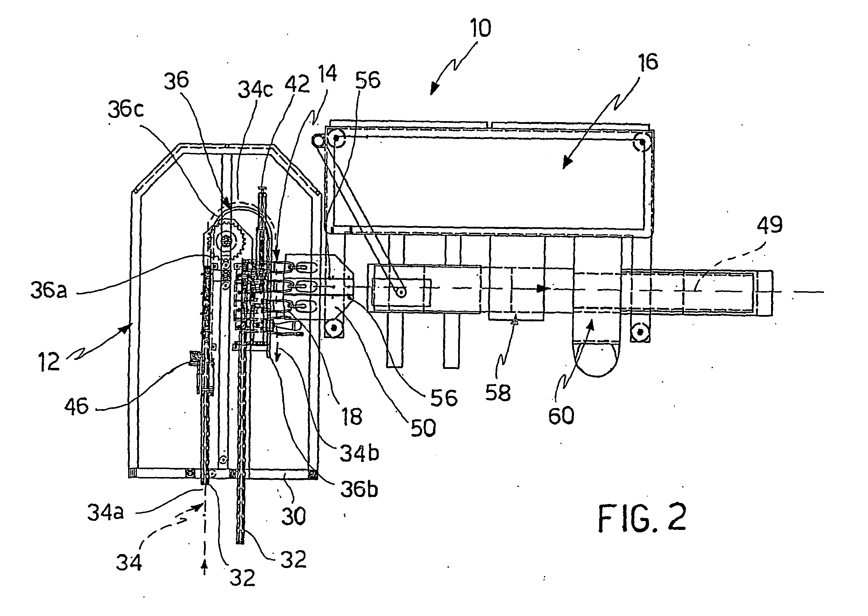

**.** Figure 2 shows a view from above of the plant of Figure 1;

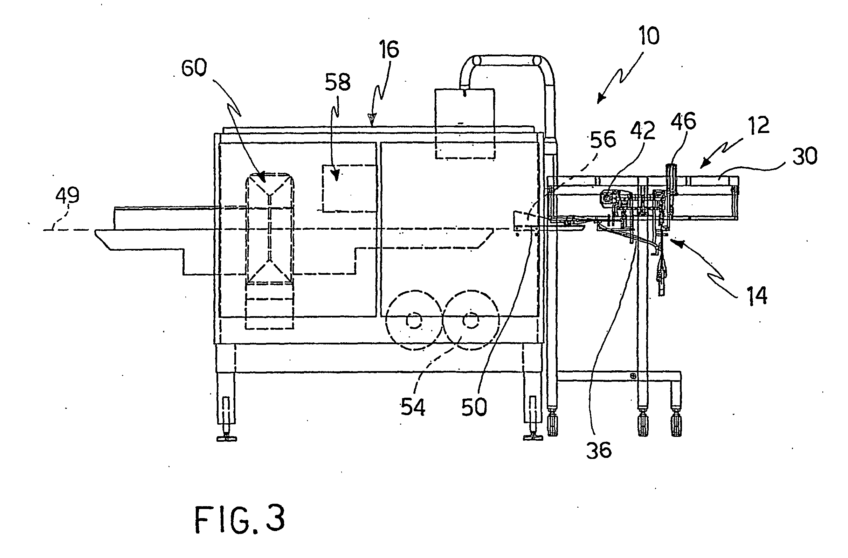

**.** Figure 3 shows a side view according to the arrow III of the plant of Figure 1;

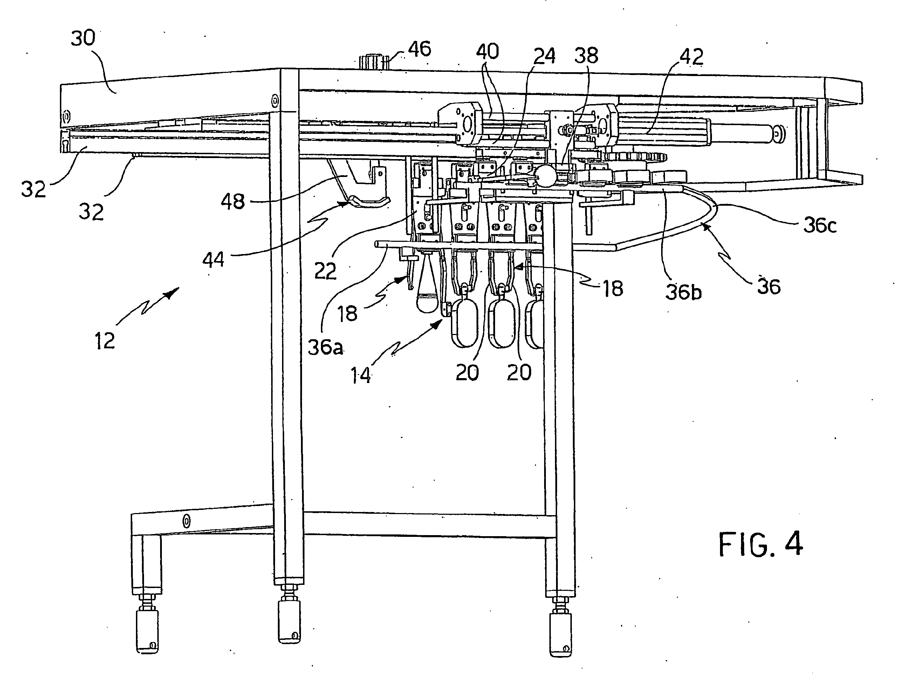

**.** Figure 4 shows a perspective view of a detail of the plant of Figure 1;

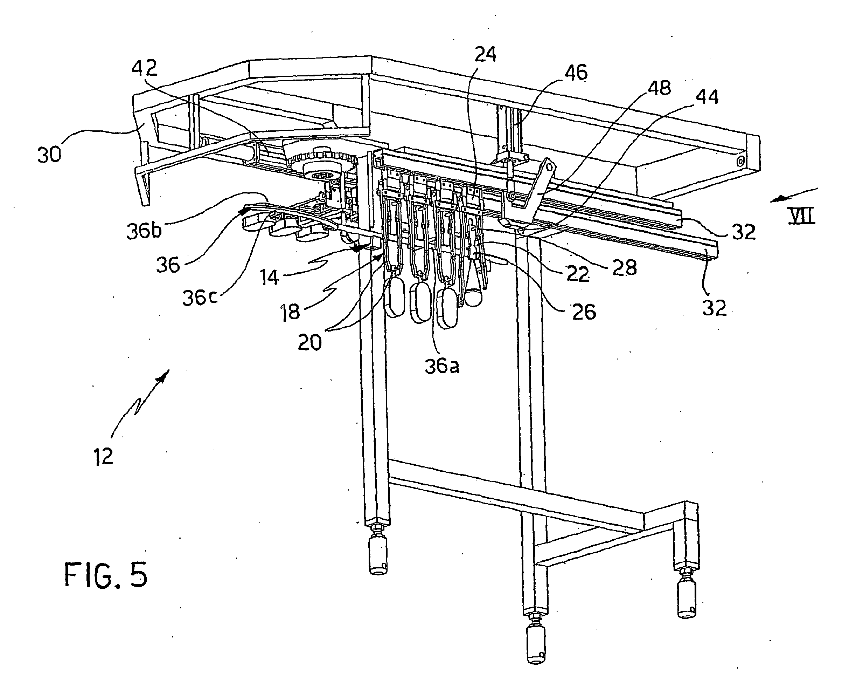

**.** Figure 5 shows a perspective view, from a different angle, of the detail of Figure 4;

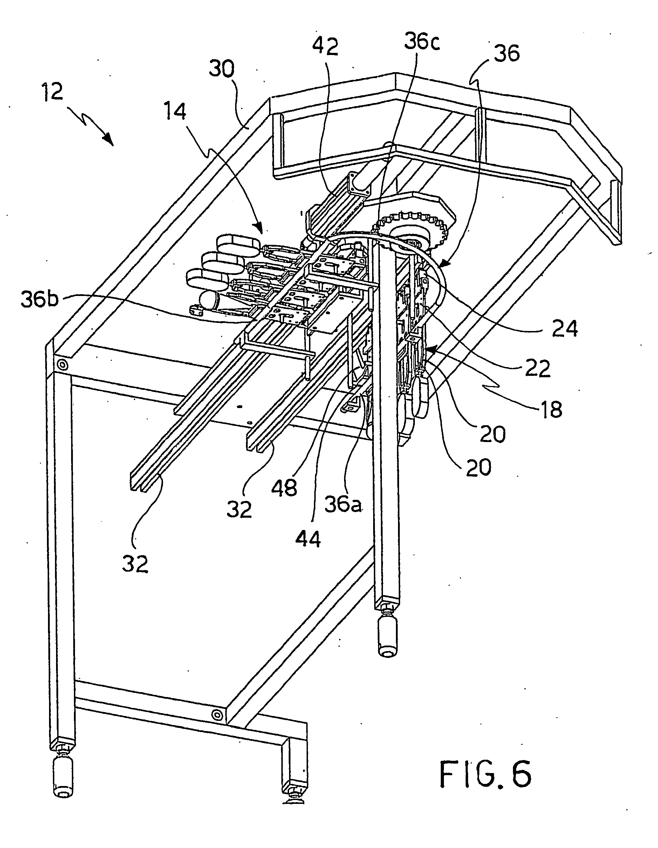

**.** Figure 6 shows a perspective view, from a different angle, of the detail of Figure 4;

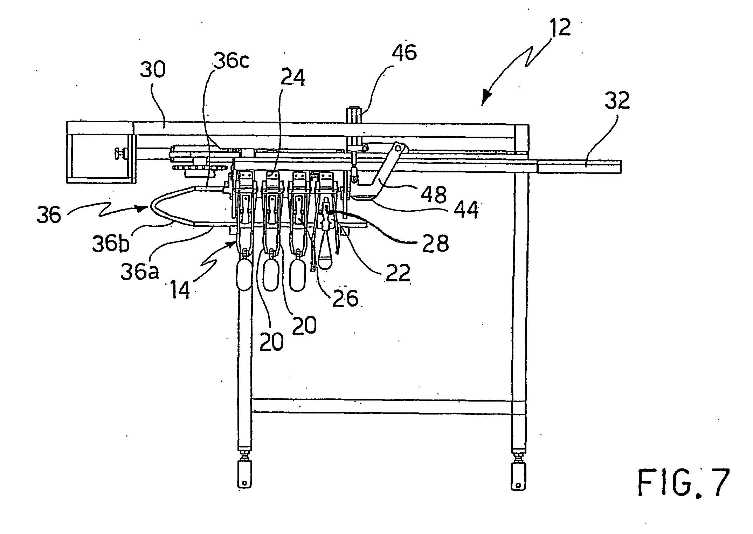

**.** Figure 7 shows a side view according to the arrow VII of the detail of Figure 5;

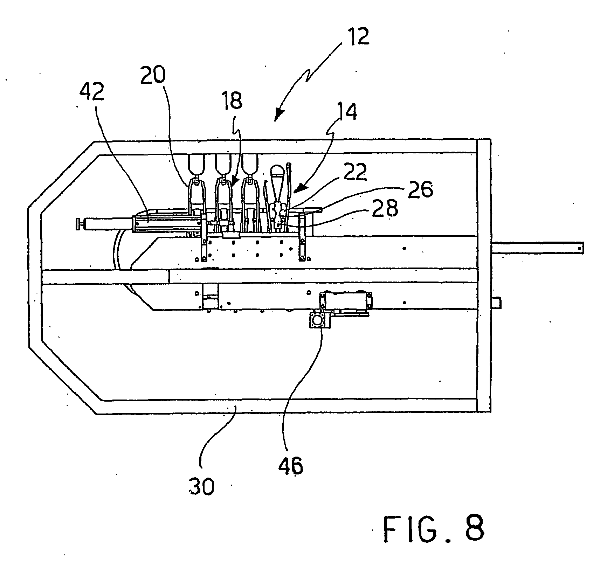

**.** Figure 8 shows a view from above of the detail of Figure 4;

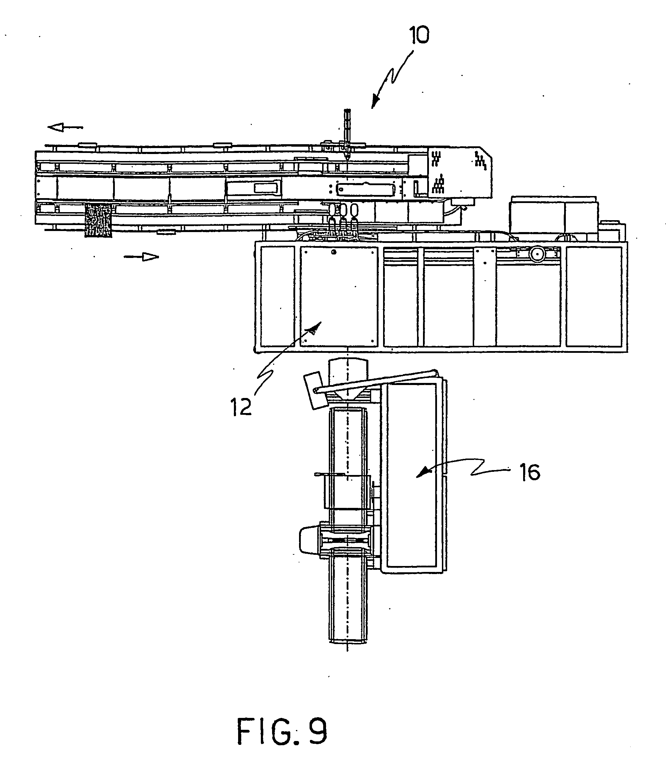

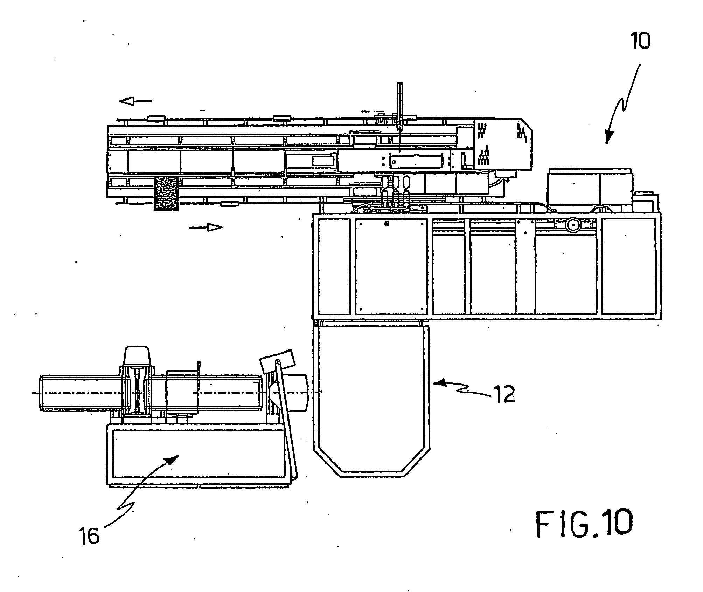

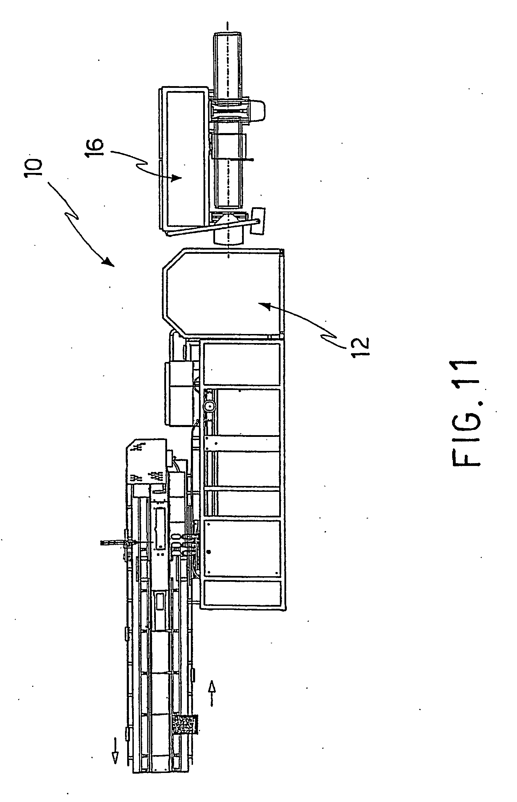

**.** Figures 9-11 illustrate possible lay-outs of the ice-cream production plant according to the present invention;

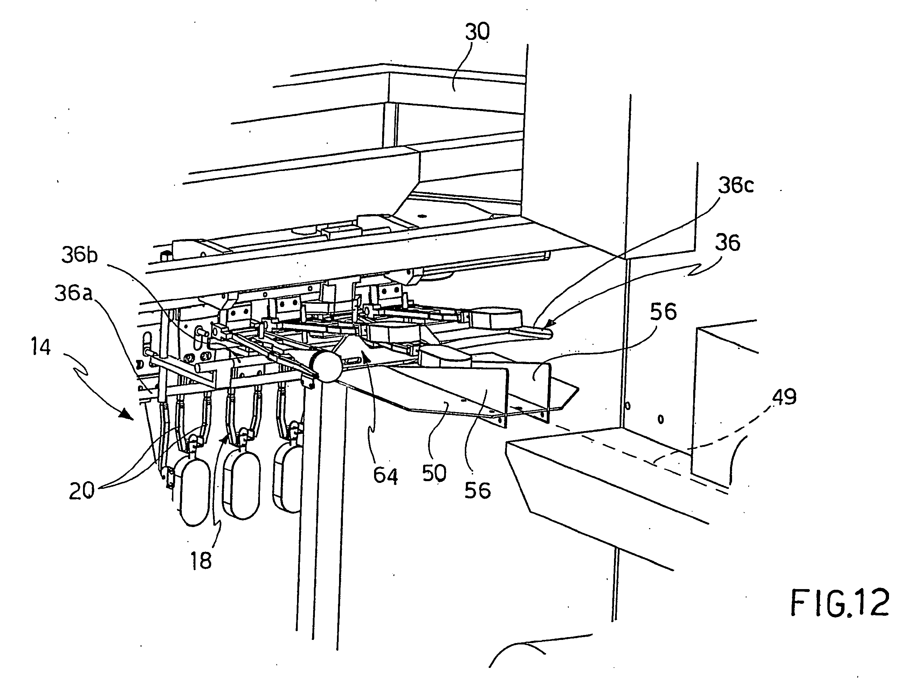

**.** Figure 12 shows a partial perspective view of a possible alternative embodiment of the ice-cream production plant of Figure 1;

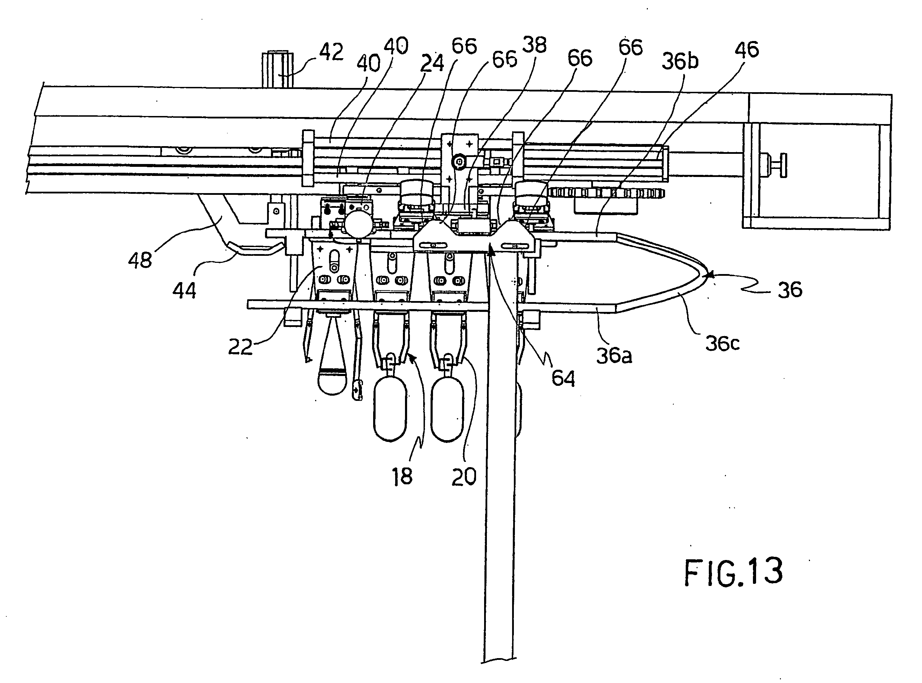

**.** Figure 13 shows a side view of a detail of the plant of Figure 12.

**.** With reference to the aforesaid figures, an ice-cream production plant has been indicated as a whole by 10, in particular a plant for the production of packaged ice-creams such as, for example, cones or ice lollies. In the example illustrated, both a cone and an ice lolly are present at the same time, so as to understand, in a single drawing, the two embodiments, although generally a plant is assigned to the production of only one type of ice-cream.

. By the term horizontal plane, there will be indicated hereinafter a plane P parallel to a support surface of the plant 10, while by vertical plane or direction there is meant a plane or a direction perpendicular to the plane P. Moreover, the expressions "upstream" and "downstream" are used with reference to the direction of travel of the ice-creams.

**.** With reference for example to Figure 1, the plant 10 comprises an ice-cream handling line 12, provided with gripping means 14 for gripping one end of the ice-creams, and an ice-cream packaging line 16, disposed downstream of the handling line 12. The handling line 12 releases the ice-creams directly onto the packaging line 16. The plant 10 also comprises means for releasing the ice-creams at the packaging line 16 according to the claim 1, whose features will be hereafter described.

**.** Still more advantageously, the speed of the handling line and the speed of the packaging line are controlled to ensure a specific distance between centres of the ice-creams along the packaging line.

**.** In the example illustrated, the handling line 12 corresponds to the final section of a production line along which the ice-creams undergo a series of processes, such as, for example, extrusion, cooling, coating, and the like, passing through different processing stations.

**.** According to a possible embodiment, the gripping means 14 comprise a series of grippers 18 movable on a specific handling path. Each gripper comprises two jaws 20, visible more clearly in Figures 4-8, arranged to grasp the end of the stick, in the case of so-called ice lollies, or of the cone.

. According to a possible embodiment, the jaws 20 are hinged to a plate 22, in its turn hinged to a slider 24.

**.** According to a possible embodiment, a wedge member 26 is mounted on the plate 22 so as to be able to slide with respect thereto, and has an actuating portion 28 preferably extending from the wedge member itself.

**.** The wedge member 26 is arranged to interact with the jaws so that its translation brings about the opening or the closing of the jaws themselves.

. According to a possible embodiment, the handling line 12 comprises a support structure 30 which supports the gripping means 14 and in particular the series of grippers 18. In more detail, the support structure 30 comprises at least one track 32 along which slide the sliders 24 of the grippers 18. In other words, the grippers 18 are suspended on the tracks 32 of the support structure 30.

. According to a possible embodiment, the grippers 18 are moved along a path 34, indicated for example in Figure 2, which comprises a first section 34a and a second section 34b which are preferably straight. Even more preferably, the two sections are parallel to each other. A curved section 34c connects the first section and the second section.

**.** The movement of the grippers along the support structure is brought about for example by means of a chain drive or similar means.

**.** According to a possible embodiment, the support structure 30 comprises means for modifying the orientation of the jaws and therefore of the ice-creams, for example from a position in which the jaws and the ice-creams slide, suspended, in a substantially vertical plane, to a position in which they slide in a substantially horizontal plane. Preferably, the jaws and the ice-creams are disposed in a vertical plane along the first section 34a of their path while they are disposed in a substantially horizontal plane along the second section 34b.

**.** According to a possible embodiment, such means for modifying the orientation of the jaws comprise a support member 36, for example produced in the form of a metal rod.

**.** According to a possible embodiment, the support member 36 comprises an inlet section 36a and an outlet section 36c which are disposed at different heights. In particular, the height of the outlet section 36b is such as to keep the jaws supported, disposed in a substantially horizontal plane, while the height of the inlet section 36a is such as to constitute a lateral support member for the jaws which are disposed in a substantially vertical plane.

**.** Preferably, the inlet section 36a is straight and parallel to the first straight section 34a of the path 34, and the outlet section 36b is straight and parallel to the second straight section 34b of the path 34.

**.** Preferably, the inlet section 36a and the outlet section 36b are connected by means of a connecting section 36c, preferably such as to follow the curved section 34c of the path 34, if present.

**.** In more detail, the inlet section 36a is mounted on the support structure 30 at a lower height than the outlet section 36b, and the connecting section 36c, preferably curved, connects in continuity the two sections disposed at different heights.

. More generally, the connecting section 36c is such as to bring the jaws 20 to the height of the outlet section 36b.

. The relative disposition between the handling line 12 and the packaging line 16 is advantageously such that the ice-creams are released directly from the handling line 12 to the packaging line 16 in the section of the path 34 in which the ice-creams are disposed in a substantially horizonal plane.

**.** According to a possible embodiment, means for releasing the ice-creams onto the packaging line are disposed at the second section 34b of the path 34 or in the section in which the ice-creams are disposed in a substantially horizontal plane. In the case where grippers are provided, the means for releasing the ice-creams are produced as means for opening the jaws.

**.** According to a possible embodiment of the means for opening the jaws, a cam 38 is mounted on the support structure 30 at the second section 34b of the path 34 and in particular at the position in which the ice-creams must be released onto the packaging line 16.

**.** According to a possible embodiment, the cam 38 comprises a member of substantially trapezoidal shape, with a first inclined section, a second straight section and a third section inclined in the opposite direction to the first. Preferably, the cam 38 is arranged to interact with the wedge member 26, and in particular with the actuating portion 28, in order to translate the wedge member itself with respect to the plate 22 during the movement of the jaws along the path 34.

**.** According to a possible embodiment, the cam 38 is advantageously mounted on the support structure 30 so as to be able to be translated, preferably in a direction parallel to the second section 34b of the path 34. In more detail, the cam 38 is mounted on guides 40 and is associated, in operation, with an actuator 42, preferably a pneumatic cylinder.

**.** According to a possible embodiment, an ice-cream removal line is provided, not illustrated and preferably disposed downstream of the point at which the ice-creams are normally released onto the packaging line. The cam 38 is arranged to be displaced between a position in which it is located at the packaging line and a position in which it is located at the removal line.

**.** According to a possible embodiment, further means for releasing the ice-creams are provided upstream of the point at which the ice-creams are normally released onto the packaging line 16. Preferably, such further means for releasing the ice-creams are disposed at the first section 34a of the path 34 or at the section in which the ice-creams are disposed in a substantially vertical plane.

**.** In the case where grippers are provided, the further means for releasing the ice-creams are produced as means for opening the jaws. According to a possible embodiment of the further means for opening the jaws, a further cam 44 is mounted at the first section 34a of the path 34.

**.** According to a possible embodiment, the further cam 44 comprises a member of substantially trapezoidal shape, with a first inclined section, a second straight section and a third section inclined in the opposite direction from the first. According to a possible embodiment, the further cam 44 is advantageously mounted on the support structure 30 so as to be able to be translated, preferably in a direction transverse to the first section 34a of the path 34. In more detail, the further cam 44 is associated, in operation, with an actuator 46, preferably a pneumatic cylinder.

**.** Even more preferably, the further cam 44 is mounted on an angular member 48 which has a first end hinged to the actuator 46 and a second end hinged to the support structure 30.

**.** The further cam 44 is mounted on the support structure 30 so as to be movable between a rest position, in which it does not interact with the wedge member 26, and in particular with the actuating portion 28, and a working position, in which it interacts with the wedge member 26, and in particular with the actuating portion 28.

**.** According to a possible embodiment, a further ice-cream removal line, not illustrated, is disposed at the further cam 44.

**.** The packaging line 16 receives the ice-creams directly from the handling line 12 and conveys them along a packaging path 49, preferably perpendicular to the second section 34b of the path 34, or to the final section of the path followed by the ice-creams along the handling line 12.

**.** According to a possible embodiment, the packaging line 16 comprises a support surface 50 disposed at the point at which the ice-creams are released by the handling line 12. The support surface 50 may be fixed to a support structure 51 of the packaging line 16 or to the support structure 30 of the handling line 12.

. A packaging sheet 52 is unwound from a reel 54, is folded on the support surface 50 to receive the ice-creams and is entrained by actuating means of known type and not illustrated in detail.

. According to a possible embodiment, fins 56 extend from the support surface 50 to fold the packaging sheet 52 onto the sides of the ice-cream and around it. Preferably, the fins 56 are disposed at a distance from one another which is slightly greater than the width of the ice-cream. Preferably, the fins 56 have a free edge inclined so as to raise the lateral edges of the packaging sheet 52 in the direction in which the latter slides along the packaging path 49.

. Welding means 58 and cutting and welding means 60, of a substantially known type, are disposed along the packaging path for welding the lateral edges of the packaging sheet 52, the portions of packaging sheet between two consecutive ice-creams and cutting a single package 62.

**.** Figures 9-11 illustrated possible lay-outs of an ice-cream production plant, provided by way of example.

**.** A description is given below of the operation of an ice-cream production plant according to the present invention.

**.** Referring by way of example to the appended drawings, the ice-creams are transported along the handling line 12 on the path 34.

**.** In the first section 34a of the path 34, the ice-creams are conveyed suspended at one end of the stick or of the cone and are disposed in a substantially vertical plane. In the embodiment illustrated, the jaws of the grippers are also disposed in a substantially vertical plane along the first section 34a.

**.** The jaws 20 slide on the support member 36 and encounter the connecting section 36c. Bearing on the support member 36, the jaws 20 rotate with respect to the slider 24 and reach a substantially horizontal plane, bearing on the outlet section 36b of the support member 36. Similarly, the ice-creams are also disposed in a substantially horizontal plane.

. When the gripper meets the cam 38, the actuating portion 28 of the wedge member 26 slides on the first inclined section and is pushed towards the outside, or away from the support structure 30. Consequently, the wedge member 26 translates towards the outside and opens the jaws 20, releasing the corresponding ice-cream directly onto the packaging line 16 and in particular onto the support surface 50, preferably between the two fins 56.

**.** The actuating portion 28 then returns to the initial position, closing the two jaws.

**.** The ice-creams are released onto the packaging sheet 52, the speed of which is controlled together with the speed of translation of the grippers so as to dispose the ice-creams on the packaging sheet at a predetermined distance between centres.

. The packaging sheet is welded laterally and at the head, between one ice-cream and the other, to create a series of packages which are then cut at the head weld to create single packs 62.

**.** In the event of jamming or of some other stoppage of the packaging line 16, the cam 38 is translated so as to displace the point of release of the ice-creams. Preferably; the cam is translated downstream of the support surface 50 and the ice-creams are released onto the removal line.

**.** According to a possible embodiment, in addition to removing the ice-creams which are located at the support surface 50, further ice-creams are prevented from reaching the support surface itself. In such a case, the further cam 44 is translated so as to interact with the actuating portion 28 and open the jaws 20 at the first section 34a of the path 34 during the advance motion of the grippers. The ice-creams are advantageously removed along the further removal line.

**.** When the packaging line is re-started, the cam 38 is brought back into the position corresponding to the support surface 50 and the further cam 44 is brought back into the rest position in which it does not interact with the wedge member 26.

. From what has been stated above, it can be seen that providing an ice-cream production plant according to the invention makes it possible to fulfil the aforesaid requirement for limiting the cleaning operations and avoiding damage to the ice-creams.

**.** The provision of a movable cam for modifying the point of release of the ice-creams renders the plant particularly advantageous and versatile in the case of jamming or stoppages of the packaging line.

**.** Owing to the further movable cam for interfering with the path of the grippers, it is possible to prevent further ice-creams from arriving at the release zone whenever there is a stoppage or jamming of the packaging line. This provision increases the versatility of the plant and allows easier management of the replacement of the packaging belt or of any problems on the packaging line.

**.** A further advantage of the plant according to the invention lies in the unusual structural simplicity thereof, which makes it possible to produce the plant at a very limited cost.

**.** It is clear that variants and/or additions to what has been described and illustrated above may be provided.

**.** For example, Figures 12 and 13 illustrate a possible alternative embodiment which provides means for raising the jaws at the fins 56. A possible embodiment of such means comprises a shaped member 64 mounted for example on the support member 36 or on the support surface 50. This shaped member 64 is preferably produced with a series of inclined profiles 66 for raising the jaws at the first of the fins 56, lowering them, as soon as the first of the fins 56 has been passed, to the height of the support surface 50, raising the jaws again at the second of the fins 56, and lowering them again as soon as the second of the fins 56 has been passed.

. In Figures 12 and 13, for the sake of simplicity of illustration, the packaging sheet has not been shown. Moreover, solely by way of example, a series of grippers have been shown which hold two types of ice-creams and do not release them at the support surface even though the cam 38 is positioned to open the gripper when the ice-cream is located between the two fins 56. This illustration is provided solely by way of example of the operation of the shaped member 64.

. The provision of the shaped member 64, and more generally of the means for raising the jaws at the fins, makes it possible to release the ice-cream when the latter is practically resting on the support surface 50, at the same time avoiding possible damage to the ice-cream itself.

**.** In the appended drawings, the handling line has a support structure 30 independent of the remainder of the plant and which, according to the examples of Figures 9-11, may be positioned differently in the lay-out of the plant, depending on requirements. Alternatively, provision may be made for the handling line of the plant according to the invention to be the terminal part of the line on which the ice-creams are moved during all the stages of the production process.

**.** According to a further embodiment, the handling line provides a path of movement which is straight or otherwise configured. In the case of a straight path, the support member 36 will comprise at least one inclined connecting section and an outlet section disposed at a height such as to position the jaws in a substantially horizontal plane.

**.** Further embodiments may provide different means for opening the grippers. The movement of the cam 38 and of the further cam 44 may also be obtained differently from what has been described and illustrated.

**.** The means for modifying the angulation of the jaws may be different from what has been described and illustrated. For example, the support member 36 may be shaped differently. In a possible embodiment, the support member comprises only the connecting section 36c and the outlet section 36b. The shape of the connecting section 36c may also be different for the purpose of modifying the orientation of the jaws.

**.** According to a possible alternative embodiment, the jaws lock the end of the ice-cream by not maintaining themselves parallel to the ice-cream. Provision may for example be made for the jaws to hold the ice-creams perpendicularly to themselves and for the jaws then to be disposed in a substantially horizontal plane, maintaining the ice-creams in a substantially vertical plane, and vice versa.

**.** The movement of the cam 38 may be provided either towards a zone downstream of the support surface 50 or towards a zone upstream thereof.

. An expert in the field, for the purpose of fulfilling contingent and specific requirements, may apply to the preferred embodiments of the plant described above, numerous modifications, adaptations and substitutions of elements with other functionally equivalent elements, without thereby departing from the scope of the following claims.

## Claims

1. An ice-cream production plant (10) comprising:
an ice-cream handling line (12) provided with gripping means (14) for gripping one end of the ice-creams,
an ice-creaar packaging line (16) disposed downstream of the handling line (12),
the handling line (12) releasing the ice-creams directly onto the packaging line (16),
means (26, 38) for releasing the ice-creams at the packaging line (16),
**characterized in that** said means (26, 38) for releasing the ice-creams are movable between a position in which they release the ice-creams onto the packaging line (16) and a position in which they release the ice-creams onto a removal line.

2. An ice-cream production plant according to claim 1, wherein the speed of the handling line (12) and the speed of the packaging line (16) are controlled to ensure a specific distance between centres of the ice-creams along the packaging line (16).

3. An ice-cream production plant according to claim 1 or 2, wherein said handling line (12) is a final section of a production line which passes through different processing stations.

4. An ice-cream production plant according to claim 1, wherein further means (26, 44) are provided for releasing the ice-creams in a position upstream of the packaging line (16), said further means (44) being movable between a rest position and a working position in event of jamming to prevent further ice-cream from reaching the packaging line.

5. An ice-cream production plant according to one of the preceding claims, wherein said gripping means (14) comprise a series of grippers (18) movable on a handling path (34).

6. An ice-cream production plant according to claim 5, wherein said handling path (34) comprises a first straight section (34a) and a second straight section (34b).

7. An ice-cream production plant according to claim 6, wherein said first straight section (34a) and said second straight section (34b) are parallel to each other.

8. An ice-cream production plant according to claim 6 or 7, wherein said first straight section (34a) and said second straight section (34b) are connected by a curved section (34c).

9. An ice-cream production plant according to one of claims 5 to 8, wherein each gripper (18) comprises two jaws (20) arranged for gripping the end of the ice-cream, said jaws being hinged to a plate (22).

10. An ice-cream production plant according to claim 9, wherein said plate (22) is hinged to a slider (24).

11. An ice-cream production plant according to claim 10, wherein said slider (24) is slidably engaged in at least one track (32) mounted on a support structure (30) of said handling line (12).

12. An ice-cream production plant according to claim 11, wherein said grippers (18) are suspended on said at least one track (32).

13. An ice-cream production plant according to claim 11 or 12, wherein said track (32) extends along at least one section (34a, 34b, 34c) of the handling path (34).

14. An ice-cream production plant according to one of claims 9 to 13, wherein means are provided for modifying the orientation of the jaws (20) and of the ice-creams along the path (34).

15. An ice-cream production plant according to claim 14, wherein said means for modifying the orientation of the jaws (20) comprise a support member (36) provided with an outlet section (36b) disposed at a specific height for maintaining the jaws (20) and the ice-creams in a substantially horizontal plane and a connecting section (36c) arranged to bring the jaws to the height of said outlet section (36b).

16. An ice-cream production plant according to claim 15, wherein said support member (36) comprises an inlet section (36a) suitable for producing a lateral support for the jaws (20) which are disposed in a substantially vertical plane.

17. An ice-cream production plant according to one of claims 9 to 16, wherein said means for releasing the ice-creams comprise a wedge member (26) slidably mounted on the plate (22) and arranged to interact with the jaws (20) for opening and closing them.

18. An ice-cream production plant according to claim 17, wherein said means for releasing the ice-creams comprise a cam (38) arranged to interact with said wedge member (26) for opening and closing the jaws.

19. An ice-cream production plant according to claim 18, wherein said cam (38) is movable between a position in which the ice-creams are released onto the packaging line (16) and a position in which the ice-creams are released onto a removal line.

20. An ice-cream production plant according to claim 19, wherein said cam (38) is slidably mounted on guides (40) and associated, in operation, with an actuator (42).

21. An ice-cream production plant according to any one of claims 17 to 20 when dependent on claim 4, wherein said further means for releasing the ice-creams in a position upstream of the packaging line (16) comprise a further cam (44) mounted at a first section (34a) of a handling path (34) so as to be movable between a rest position, in which it does not interact with the wedge member (26), and a working position, in which it interacts with the wedge member (26).

22. An ice-cream production plant according to claim 21, wherein said further cam (44) is mounted on a support structure (30) so as to be able to be translated in a direction transverse to the first section (34a) of the path (34).

23. An ice-cream production plant according to claim 22, wherein said further cam (44) is mounted on an angular member (48) which has a first end hinged to an actuator (46) and a second end hinged to the support structure (30).

24. An ice-cream production plant according to one of claims 21 to 23, wherein a further ice-cream removal line is provided, disposed at the further cam (44).

25. An ice-cream production plant according to one of the preceding claims, wherein said packaging line (16) receives the ice-creams directly from the handling line (12) and conveys them along a packaging path (49) perpendicular to a final section (34b) of a handling path (34).

26. An ice-cream production plant according to claim 25, wherein said packaging line (16) comprises a support surface (50) disposed at the point at which the ice-creams are released from the handling line (12).

27. An ice-cream production plant according to claim 26, wherein said support surface (50) comprises fins (56) which extend from the support surface (50) for folding a packaging sheet (52) onto the sides of the ice-cream and around the latter.

28. An ice-cream production plant according to claim 27 when dependent on one of claims 9 to 24, wherein means are provided for raising the jaws (20) at said fins (56).

29. An ice-cream production plant according to claim 28, wherein said means for raising the jaws comprise a shaped member (64) produced with a series of inclined profiles (66).

30. An ice-cream production plant according to one of the preceding claims, wherein said handling line (12) comprises a support structure (30) independent of the remainder of the plant.

## Patentansprüche

1. Speiseeis-Produktionsanlage (10), umfassend:
eine Speiseeis-Handhabungslinie (12) mit Greifeinrichtungen (14) zum Greifen eines Endes der Speiseeise,
eine Speiseeis-Verpackungslinie (16), die stromabwärts der Handhabungslinie (12) angeordnet ist,
wobei die Handhabungslinie (12) die Speiseeise direkt auf die Verpackungslinie (16) freigibt,
Einrichtungen (26, 38) zum Freigeben der Speiseeise an der Verpackungslinie (16),
**dadurch gekennzeichnet, dass** diese Einrichtungen (26, 38) zum Freigeben der Speiseeise zwischen einer Position, in der sie die Speiseeise auf die Verpackungslinie (16) freigeben, und einer Position, in der sie die Speiseeise auf eine Entnahmelinie freigeben, beweglich sind.

2. Speiseeis-Produktionsanlage nach Anspruch 1, wobei die Geschwindigkeit der Handhabungslinie (12) und die Geschwindigkeit der Verpackungslinie (16) so gesteuert sind, dass eine bestimmte Entfernung zwischen den Mitten der Speiseeise entlang der Verpackungslinie (16) sichergestellt ist.

3. Speiseeis-Produktionsanlage nach Anspruch 1 oder 2, wobei die Handhabungslinie (12) ein Endabschnitt einer Produktionslinie ist, die verschiedene Verarbeitungsstationen durchläuft.

4. Speiseeis-Produktionsanlage nach Anspruch 1, wobei weitere Einrichtungen (26, 44) vorgesehen sind, um die Speiseeise in einer Position stromaufwärts der Verpackungslinie (16) freizugeben, wobei die weitere Einrichtung (44) im Falle eines Rückstaus zwischen einer Ruheposition und einer Arbeitsposition beweglich ist, um zu verhindern, dass weitere Speiseeise die Verpackungslinie erreichen.

5. Speiseeis-Produktionsanlage nach einem der vorhergehenden Ansprüche, wobei die Greifeinrichtung (14) eine Reihe von Greifern (18) umfasst, die auf einem Handhabungspfad (34) beweglich sind.

6. Speiseeis-Produktionsanlage nach Anspruch 5, wobei der Handhabungspfad (34) einen ersten geraden Abschnitt (34a) und einen zweiten geraden Abschnitt (34b) umfasst.

7. Speiseeis-Produktionsanlage nach Anspruch 6, wobei der erste gerade Abschnitt (34a) und der zweite gerade Abschnitt (34b) parallel zueinander sind.

8. Speiseeis-Produktionsanlage nach Anspruch 6 oder 7, wobei der erste gerade Abschnitt (34a) und der zweite gerade Abschnitt (34b) durch einen gekrümmten Abschnitt (34c) verbunden sind.

9. Speiseeis-Produktionsanlage nach einem der Ansprüche 5 bis 8, wobei jeder Greifer (18) zwei Klemmbacken (20) umfasst, die angeordnet sind, um das Ende des Speiseeises zu greifen, wobei die Klemmbacken an einer Platte (22) angelenkt sind.

10. Speiseeis-Produktionsanlage nach Anspruch 9, wobei die Platte (22) an einem Gleiter (24) angelenkt ist.

11. Speiseeis-Produktionsanlage nach Anspruch 10, wobei der Gleiter (24) gleitend in zumindest eine Spur (32) eingreift, die auf einer Stützstruktur (30) der Handhabungslinie (12) befestigt ist.

12. Speiseeis-Produktionsanlage nach Anspruch 11, wobei jeder Greifer (18) auf der zumindest einen Spur (32) aufgehängt ist.

13. Speiseeis-Produktionsanlage nach Anspruch 11 oder 12, wobei die Spur (32) sich entlang zumindest eines Abschnitts (34a, 34b, 34c) des Handhabungspfads (34) erstreckt.

14. Speiseeis-Produktionsanlage nach einem der Ansprüche 9 bis 13, wobei eine Einrichtung vorgesehen ist, um die Ausrichtung der Klemmbacken (20) und der Speiseeise entlang des Pfads (34) zu verändern.

15. Speiseeis-Produktionsanlage nach Anspruch 14, wobei die Einrichtung zum Verändern der Ausrichtung der Klemmbacken (20) ein Stützelement (36), das mit einem Auslassabschnitt (36b) versehen ist, der an einer bestimmten Höhe angeordnet ist, um die Klemmbacken (20) und die Speiseeise in einer im Wesentlichen horizontalen Ebene zu halten, und einen Verbindungsabschnitt (36c) umfasst, der angeordnet ist, um die Klemmbacken zur Höhe des Auslassabschnitts (36b) zu bringen.

16. Speiseeis-Produktionsanlage nach Anspruch 15, wobei das Stützelement (36) einen Einlassabschnitt (36a) umfasst, der geeignet ist, eine seitliche Stütze für die Klemmbacken (20) zu erzeugen, die in einer im Wesentlichen vertikalen Ebene angeordnet sind.

17. Speiseeis-Produktionsanlage nach einem der Ansprüche 9 bis 16, wobei die Einrichtung zum Freigeben der Speiseeise ein Keilelement (26) umfasst, das gleitfähig auf der Platte (22) befestigt ist und angeordnet ist, um mit den Klemmbacken (20) zusammenzuwirken, um diese zu öffnen und zu schließen.

18. Speiseeis-Produktionsanlage nach Anspruch 17, wobei die Einrichtung zum Freigeben der Speiseeise einen Nocken (38) umfasst, der angeordnet ist, um mit dem Keilelement (26) zusammenzuwirken, um die Klemmbacken zu öffnen und zu schließen.

19. Speiseeis-Produktionsanlage nach Anspruch 18, wobei der Nocken (38) zwischen einer Position, in der die Speiseeise auf die Verpackungslinie (16) freigegeben werden, und einer Position, in der die Speiseeise auf eine Entnahmelinie freigegeben werden, beweglich ist.

20. Speiseeis-Produktionsanlage nach Anspruch 19, wobei der Nocken (38) gleitfähig auf Führungen (40) befestigt ist und im Betrieb mit einem Stellglied (42) verbunden ist.

21. Speiseeis-Produktionsanlage nach einem der Ansprüche 17 bis 20, wenn diese von Anspruch 4 abhängig sind, wobei die weitere Einrichtung zum Freigeben der Speiseeise in einer Position stromaufwärts der Verpackungslinie (16) einen weiteren Nocken (44) umfasst, der an einem ersten Abschnitt (34a) eines Handhabungspfads (34) befestigt ist, so dass er zwischen einer Ruheposition, in der er nicht mit dem Keilelement (26) zusammenwirkt, und einer Arbeitsposition, in der er mit dem Keilelement (26) zusammenwirkt, beweglich ist.

22. Speiseeis-Produktionsanlage nach Anspruch 21, wobei der weitere Nocken (44) auf einer Stützstruktur (30) befestigt ist, so dass er in einer Richtung quer zum ersten Abschnitt (34a) des Pfads (34) verschoben werden kann.

23. Speiseeis-Produktionsanlage nach Anspruch 22, wobei der weitere Nocken (44) auf einem Winkelelement (48) befestigt ist, das ein erstes Ende, das an einem Stellglied (46) angelenkt ist, und ein zweites Ende aufweist, das an der Stützstruktur (30) angelenkt ist.

24. Speiseeis-Produktionsanlage nach einem der Ansprüche 21 bis 23, wobei eine weiteres Speiseeis-Entnahmelinie vorgesehen ist, das am weiteren Nocken (44) angeordnet ist.

25. Speiseeis-Produktionsanlage nach einem der vorhergehenden Ansprüche, wobei die Verpackungslinie (16) die Speiseeise direkt von der Handhabungslinie (12) erhält und diese entlang eines Verpackungspfades (49) senkrecht zu einem Endabschnitt (34b) eines Handhabungspfades (34) befördert.

26. Speiseeis-Produktionsanlage nach Anspruch 25, wobei die Verpackungslinie (16) eine Stützfläche (50) umfasst, die an dem Punkt angeordnet ist, an dem die Speiseeise von der Handhabungslinie (12) freigegeben werden.

27. Speiseeis-Produktionsanlage nach Anspruch 26, wobei die Stützfläche (50) Stege (56) umfasst, die sich von der Stützfläche (50) erstrecken, um ein Verpackungsblatt (52) auf die Seiten des Speiseeises und um dieses herum zu falten.

28. Speiseeis-Produktionsanlage nach Anspruch 27, wenn dieser von einem der Ansprüche 9 bis 24 abhängig ist, wobei eine Einrichtung vorgesehen ist, um die Klemmbacken (20) an den Stegen (56) anzuheben.

29. Speiseeis-Produktionsanlage nach Anspruch 28, wobei die Einrichtung zum Anheben der Klemmbacken ein Formelement (64) umfasst, das mit eine Reihe von geneigten Profilen (66) hergestellt ist.

30. Speiseeis-Produktionsanlage nach einem der vorhergehenden Ansprüche, wobei die Handhabungslinie (12) eine Stützstruktur (30) unabhängig vom Rest der Anlage umfasst.

## Revendications

1. Installation de production de crèmes glacées (10) comprenant :
une ligne de manipulation des crèmes glacées (12) dotée de moyens de saisie (14) pour saisir une extrémité desdites crèmes glacées,
une ligne d'emballage des crèmes glacées (16) disposée en aval de la ligne de manipulation (12),
la ligne de manipulation (12), en libérant les crèmes glacées directement sur la ligne d'emballage (16),
des moyens (26, 38) pour libérer les crèmes glacées sur la ligne d'emballage (16),
**caractérisée en ce que** lesdits moyens (26, 38) pour libérer les crèmes glacées sont mobiles entre une position dans laquelle ils libèrent les crèmes glacées sur la ligne d'emballage (16) et une position dans laquelle ils libèrent les crèmes glacées sur une ligne d'enlèvement.

2. Installation de production de crèmes glacées selon la revendication 1, dans laquelle la vitesse de la ligne de manipulation (12) et la vitesse de la ligne d'emballage (16) sont contrôlées pour assurer une distance spécifique entre les centres des crèmes glacées le long de la ligne d'emballage (16).

3. Installation de production de crèmes glacées selon la revendication 1 ou 2, dans laquelle ladite ligne de manipulation (12) est une section finale d'une ligne de production qui passe à travers différentes stations de traitement.

4. Installation de production de crèmes glacées selon la revendication 1, dans laquelle d'autres moyens (26, 44) sont dotés pour libérer les crèmes glacées dans une position en amont de la ligne d'emballage (16), lesdits autres moyens (44) étant mobiles entre une position de repos et une position de travail en cas de bourrage, pour éviter que d'autres crèmes glacées n'atteignent la ligne d'emballage.

5. Installation de production de crèmes glacées selon l'une des revendications précédentes, dans laquelle lesdits moyens de saisie (14) comprennent une série de pinces (18) mobiles sur un chemin de traitement (34).

6. Installation de production de crèmes glacées selon la revendication 5, dans laquelle ledit chemin de traitement (34) comprend une première section droite (34a) et une seconde section droite (34b).

7. Installation de production de crèmes glacées selon la revendication 6, dans laquelle ladite première section droite (34a) et ladite seconde section droite (34b) sont parallèles l'une à l'autre.

8. Installation de production de crèmes glacées selon la revendication 6 ou 7, dans laquelle ladite première section droite (34a) et ladite seconde section droite (34b) sont connectées par une section courbe (34c).

9. Installation de production de crèmes glacées selon l'une des revendications 5 à 8, dans laquelle chaque pince (18) comprend deux mâchoires (20) disposées pour saisir l'extrémité de la crème glacée, lesdites mâchoires étant articulées à une plaque (22).

10. Installation de production de crème glacée selon la revendication 9, dans laquelle ladite crème glacée (22) est articulée à un volet coulissant (24).

11. Installation de production de crème glacée selon la revendication 10, dans laquelle ledit volet coulissant (24) est en prise coulissante dans au moins une piste (32) montée sur une structure de support (30) de ladite ligne de manipulation (12).

12. Installation de production de crème glacée selon la revendication 11, dans laquelle lesdites pinces (18) sont suspendues sur ladite au moins une piste (32).

13. Installation de production de crème glacée selon la revendication 11 ou 12, dans laquelle ladite piste (32) s'étend le long d'au moins une section (34a, 34b, 34c) du chemin de traitement (34).

14. Installation de production de crème glacée, selon l'une des revendications 9 à 13, dans laquelle des moyens sont fournis pour modifier l'orientation des mâchoires (20) et des crèmes glacées, le long du chemin (34).

15. Installation de production de crème glacée, selon la revendication 14, dans laquelle lesdits moyens pour modifier l'orientation des mâchoires (20) comprennent un élément de support (36) doté d'une section de sortie (36b) disposée à une hauteur spécifique pour maintenir les mâchoires (20) et les crèmes glacées dans un plan sensiblement horizontal et une section de raccord (36c), disposé de façon à mettre les mâchoires à la hauteur de ladite section de sortie (36b).

16. Installation de production de crème glacée, selon la revendication 15, dans laquelle ledit élément de support (36) comprend une section d'entrée (36a) adaptée pour produire un support latéral pour les mâchoires (20) qui sont disposées dans un plan sensiblement vertical.

17. Installation de production de crème glacée, selon l'une des revendications 9 à 16, dans laquelle lesdits moyens pour libérer les crèmes glacées comprennent un élément de cale (26) monté de manière coulissante sur la plaque (22) et disposé pour interagir avec les mâchoires (20) pour les ouvrir et les fermer.

18. Installation de production de crème glacée, selon la revendication 17, dans laquelle lesdits moyens pour libérer les crèmes glacées comprennent une came (38) disposée pour interagir avec ledit élément de cale (26) pour ouvrir et fermer les mâchoires.

19. Installation de production de crème glacée, selon la revendication 18, dans laquelle ladite came (38) est mobile entre une position dans laquelle les crèmes glacées sont libérées sur la ligne d'emballage (16) et une position dans laquelle les crèmes glacées sont libérées sur une ligne d'enlèvement.

20. Installation de production de crème glacée, selon la revendication 19, dans laquelle ladite came (38) est montée en coulissement sur des guides (40) et associée, en fonctionnement, à un actionneur (42).

21. Installation de production de crème glacée, selon l'une quelconque des revendications 17 à 20, quand elles dépendent de la revendication 4, dans laquelle lesdits autres moyens pour libérer les crèmes glacées, dans une position en amont de la ligne d'emballage (16) comprennent une autre came (44) montée sur une première section (34a) d'un chemin de manipulation (34) de façon à être mobile entre une position de repos, dans laquelle elle n'interagit pas avec l'élément de cale (26) et une position de travail, dans laquelle elle interagit avec l'élément de cale (26).

22. Installation de production de crème glacée, selon la revendication 21, dans laquelle ladite autre came (44) est montée sur une structure de support (30), de façon à pouvoir être translaté dans une direction transversale à la première section (34a) du chemin (34).

23. Installation de production de crème glacée, selon la revendication 22, dans laquelle ladite autre came (44) est montée sur un élément angulaire (48) qui a une première extrémité articulée à un actionneur (46) et une seconde extrémité articulée à la structure de support (30).

24. Installation de production de crème glacée, selon l'une des revendications 21 à 23, dans laquelle une autre ligne d'enlèvement de crème glacée est fournie, disposée au niveau d'une autre came (44).

25. Installation de production de crème glacée, selon l'une des revendications précédentes, dans laquelle ladite ligne d'emballage (16) reçoit les crèmes glacées, directement à partir de la ligne de manipulation (12) et les convoie le long d'un chemin d'emballage (49) perpendiculaire à une section finale (34b) d'un chemin de manipulation (34).

26. Installation de production de crème glacée, selon la revendication 25, dans laquelle ladite ligne d'emballage (16) comprend une surface de support (50) disposée à l'endroit où les crèmes glacées sont libérées de la ligne de manipulation (12).

27. Installation de production de crème glacée, selon la revendication 26, dans laquelle ladite surface de support (50) comprend des ailettes (56) qui s'étendent depuis la surface de support (50) pour plier une feuille d'emballage (52) sur les côtés de la crème glacée et autour de la lettre.

28. Installation de production de crème glacée, selon la revendication 27 quand elle dépend d'une des revendications 9 à 24, dans laquelle des moyens sont prévus pour lever les mâchoires (20) au niveau desdites ailettes (56).

29. Installation de production de crème glacée, selon la revendication 28, dans laquelle lesdits moyens pour lever les mâchoires comprennent un élément façonné (64) produit avec une série de profils inclinés (66).

30. Installation de production de crème glacée, selon l'une des revendications précédentes, dans laquelle ladite ligne de manipulation (12) comprend une structure de support (30) indépendamment du reste de l'installation.
